# EUROPÄISCHE PATENTSCHRIFT

(11) **EP 4 529 971 B1**
(45) Veröffentlichungstag und Bekanntmachung des Hinweises auf die Patenterteilung: **28.10.2026**
(21) Anmeldenummer: 23199850.1
(22) Anmeldetag: 26.09.2023
(51) Int. Cl.: B01D 46/00, B01D 46/12, B01D 46/52, B01D 46/64

(54) **FILTER MIT UMLAUFENDEM DICHTELEMENT**
FILTER WITH CIRCUMFERENTIAL SEALING ELEMENT
FILTRE AVEC ÉLÉMENT D'ÉTANCHÉITÉ CIRCONFÉRENTIEL

(43) Veröffentlichungstag der Anmeldung: 02.04.2025
(73) Patentinhaber: Carl Freudenberg KG, 69469 Weinheim (DE)
(72) Erfinder: Beisel, Tobias, 69483 Wald-Michelbach (DE)

(56) Entgegenhaltungen:
- EP-A1- 0 723 800
- US-A1- 2016 114 275

## Beschreibung

Die Erfindung betrifft einen Filter zum Reinigen eines Luftstroms mit zumindest einem ersten Filterelement für eine erste Filterstufe und einem zweiten Filterelement für einen zweite Filterstufe, wobei das zweite Filterelement mit einem umlaufenden Dichtelement versehen und das Dichtelement stoffschlüssig mit dem zweiten Filterelement verbunden ist.

### Stand der Technik

Aus dem Stand der Technik sind Filterelemente wie z.B. Taschenfilter, Kassettenfilter, Panelfilter, Kantenleimfilter oder Flachfilter bekannt. Sie werden zur Filtration von Fluiden, insbesondere von Luft, verwendet. Hierzu werden die Filterelemente üblicherweise in Filtergehäuse eingesetzt und mittels Befestigungselementen arretiert, z.B. verschraubt oder verrastet. Um eine effiziente Filtration zu gewährleisten, muss die Verbindung von Filter und Filterrahmen eine hohe Dichtigkeit aufweisen. Um diese zu gewährleisten, werden üblicherweise zusätzliche Dichtungen eingesetzt. Ein solcher Filter ist in der EP 3 453 441 B1 beschrieben.

Die US 2016 / 0 114 275 A1 zeigt unterschiedliche Ausgestaltungen von Filterpatronen welche ein zylindrisches und ein darin aufgenommenes kegelförmiges Filterelement vorschlagen.

In der DE 10 2013 011 457 A1 wird ein Filterelement für die Innenraumluft einer Fahrerkabine von Land- und Arbeitsmaschinen, insbesondere mit Spritz- oder Sprühvorrichtungen für Pflanzenschutz- oder Düngemittel beschrieben. Das Innenraumluftfilterelement umfasst eine Adsorptionsfilterlage mit Aktivkohle, eine Feinfilterlage, insbesondere zur Abscheidung von Aerosolen und eine umlaufende Dichtung zur Trennung der Rohgasseite von der Reingasseite beim Einbau in ein Filtergehäuse.

Bestehen die unterschiedlichen Filterstufen aus unterschiedlichen Filterelementen, so muss jedes Filterelement gegenüber dem aufnehmenden Filtergehäuse sicher abgedichtet werden. Auch muss bei der Montage aller Filterelemente darauf geachtet werden, dass die Dichtungen der Filterelemente nicht beschädigt werden.

### Aufgabenstellung

Aufgabe der vorliegenden Erfindung ist es, einen Filter zu schaffen, welcher mindestens zwei Filterelemente für mindestens zwei Filterstufen besitzt, eine materialsparsame Fertigung aufweist und eine einfache und sichere Montage in einer Filteraufnahme ermöglicht.

### Technische Lösung

Gelöst wird diese Aufgabe durch einen Filter wie er nachfolgend beschrieben und beansprucht ist.

Erfindungsgemäß wurde als vorteilhaft erkannt, ein Dichtelement vorzusehen, welches eine Abdichtung des ersten Filterelements zum zweiten Filterelement und eine Abdichtung des zweiten Filterelements zur Filteraufnahme erlaubt.

Der Filter dient zum Reinigen eines Luftstroms mit zumindest einem ersten Filterelement für eine erste Filterstufe und einem zweiten Filterelement für einen zweite Filterstufe. Das zweite Filterelement ist mit einem umlaufenden Dichtelement versehen, welches stoffschlüssig mit dem zweiten Filterelement verbunden ist. Die stoffschlüssige Verbindung der umlaufenden Dichtung kann z.B. durch Verkleben oder integrierte Fertigung realisiert sein, sodass eine sichere Abdichtung zwischen Filterelement und Filteraufnahme gewährleistet werden kann.

Erfindungsgemäß weist das Dichtelement mindestens eine außenliegende, umlaufende Dichtfläche auf zur Abdichtung gegenüber einer Filteraufnahme. Somit korrespondiert die Form der Dichtfläche mit der Form der Filteraufnahme. Bei der Filteraufnahme kann es sich um ein Filtergehäuse oder um einen Luftkanal handeln. Die außenliegende, umlaufende Dichtfläche dient zur radialen Abdichtung des Filters zur Filteraufnahme. Radial meint dabei radial zur Erstreckung und Durchströmungsrichtung des Filters.

Das Dichtelement weist in der Mitte eine Öffnung auf, durch welche bei der Filtration das zu filternde Fluid strömt und welche eine innenliegende, umlaufende Dichtfläche zur Abdichtung gegenüber dem ersten Filterelement aufweist. Das Dichtelement ist also derart ausgeformt, dass es sowohl das erste Filterelement als auch das zweite Filterelement rahmenartig umschließt. Mit nur einem Dichtelement wird so eine Abdichtung des ersten Filterelements zum zweiten Filterelement und eine Abdichtung des zweiten Filterelements zur Filteraufnahme erreicht.

**In** einer vorteilhaften Weiterbildung der Erfindung ist das erste Filterelement in einem Presssitz in dem Dichtelement aufgenommen und die innenliegende Dichtfläche liegt mit einer Presspassung an dem ersten Filterelement an.

Die innenliegende Dichtfläche des Dichtelements wird durch eine Dichtlippe gebildet.

Die Dichtlippe kann in unverformtem Zustand, d.h. bevor das erste Filterelement in die Dichtung eingesetzt wird, eine Überlappung von mindestens 1 Millimeter gegenüber der Gegenfläche des ersten Filterelements besitzen. Das Dichtelement und das erste Filterelement sind kraftschlüssig miteinander verbunden. Dazu ist die Passung zwischen Dichtelement und erstem Filterelement so gewählt, dass ein Presssitz bzw. eine Presspassung gewährleistet wird. Eine Presspassung kann auch als Übermaßpassung bezeichnet werden. Der Presssitz gewährleistet dabei eine sichere Halterung des ersten Filterelements in seiner Montageposition auch bei mechanischen Beanspruchungen im Betrieb.

Es wurde festgestellt, dass es vorteilhaft ist, das Dichtelement mit einer umlaufenden Kompensationsnut zu versehen, welche als anströmseitig angeordnete, umlaufende Vertiefung ausgebildet ist. Die Kompensationsnut kann vorteilhafterweise Rückstellungskräfte verringern. Insbesondere die Kombination von Dichtlippe und Kompensationsnut trägt zu einer leckagefreien Montage des Filters bei sehr hoher Dichtigkeit bei.

**In** möglicher Ausgestaltung kann das Dichtelement an das zweite Filterelement angespritzt sein, d.h. als Spritzgussteil aus spritzgießfähigem Material ausgebildet sein, insbesondere aus Polyurethan oder Silikon.

Es wurde herausgefunden, dass eine Shore-Härte A größer 20 des Materials des Dichtelements eine gute Abdichtung erlaubt. Die Shore-Härte A kann insbesondere im Bereich 20 bis 50 liegen, bei normgerechter Messungen nach DIN ISO 7619-1 oder ISO 868 oder ASTM D2240.

In einer Ausführungsform des Filters ist das erste Filterelement und ggfs. auch das zweite Filterelement als umlaufend mit Kantenbändern versehener Faltenbalg aus einem plissierten Filtermedium ausgeführt. Hat das Filterelement in seiner Draufsicht eine rechteckige Form, dann ist es an seinen vier Seiten mit Kantenbändern versehen. Das erste Filterelement ist dabei derart ausgeführt, dass es eine gewisse Eigensteifigkeit besitzt, damit die umlaufenden Kantenbänder gut an der innenliegenden Dichtfläche anliegen und nicht von der Dichtfläche verformt werden.

In Weiterbildung des Filters sind die Kanten der beiden Endfalten des Filtermediums des ersten Filterelements zu einer Anströmseite des Filters hin orientiert. Wird das erste Filterelement von einem zu reinigenden Luftstrom durchströmt, drückt der Luftstrom die jeweilige Endfalte des Filtermediums und das Kantenband radial nach außen und es wird eine entsprechende Kraft auf das Dichtelement ausgeübt.

In einer Ausführungsform des Filters sind das erste Filterelement als ein Partikelfilterelement und/oder das zweite Filterelement als ein Adsorptionsfilterelement ausgebildet. Das Adsorptionsfilterelement kann als Adsorbens beispielsweise Aktivkohle aufweisen.

Die Erfindung betrifft auch eine Filteranordnung mit einem Filter wie vorstehend beschrieben und einem Filtergehäuse zur Aufnahme des Filters.

In Weiterbildung der Filteranordnung besitzt diese einen rahmenförmigen Deckel, welcher mit dem Filtergehäuse verbindbar ist, oder alternativ ein Gehäuseoberteil als Teil des Filtergehäuses, welche jeweils zum Fixieren des Filters im Filtergehäuse dienen. So kann auch verhindert werden, dass das erste Filterelement aus dem Dichtelement herausrutschen könnte.

Die Erfindung betrifft auch die Verwendung einer Filteranordnung wie vorstehend beschrieben als Innenraumluftfilteranordnung zur Filtration und Reinigung der Kabinenzuluft in einem Fahrzeug oder als Zuluftfilter in einer Brennstoffzelleneinheit.

Bei der Innenraumluftfilteranordnung erfolgt eine Filtration und Reinigung der Kabinenzuluft in einem Fahrzeug, welches einer erhöhten Schadstoffbelastung unterliegen kann, insbesondere in einem Nutzfahrzeug, einem Schwerlastfahrzeug oder einem Offroadfahrzeug. Bei den Fahrzeugen kann es sich beispielsweise handeln um Lastwagen, Baumaschinen, Walzen, Raupenfahrzeuge, Straßenfräsen, Planierraupen, Laderaupen, Bagger, Kräne, Erntemaschinen, Landmaschinen, Mähdrescher, Häcksler, Traktoren, selbstfahrende Feldspritzen, Forstfahrzeuge oder ähnliches.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1a und b: die Montage des Filters aus zwei Filterelementen
- Fig. 2a: eine Ausführungsform eines Filters
- Fig. 2b: eine Detailansicht des ersten Filterelements
- Fig. 3: eine weitere Ausführungsform eines Filters
- Fig. 4: eine Filteranordnung mit einem Filter

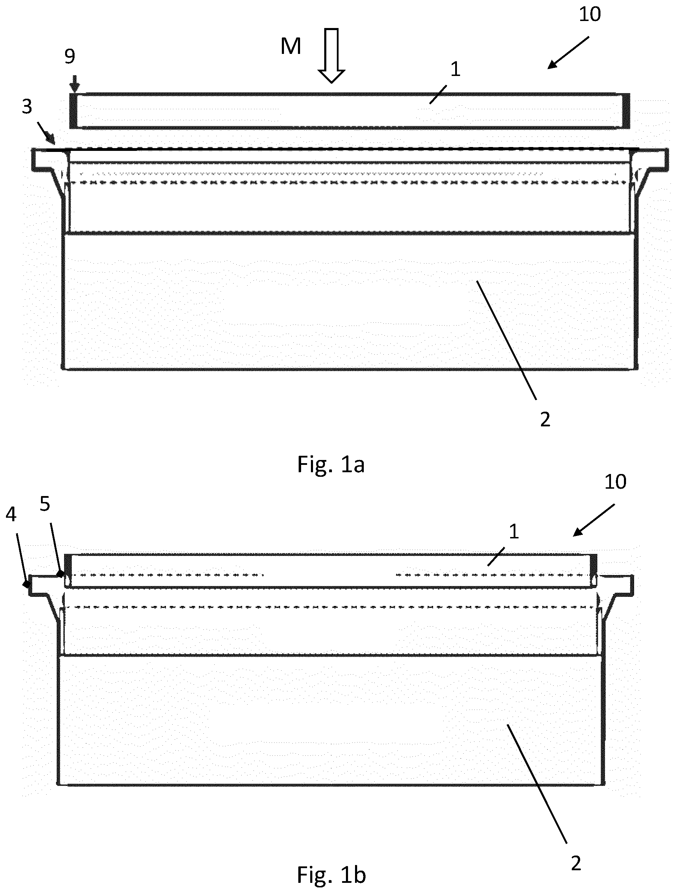

Fig. 1a und b zeigen die Montage des Filters 10 aus zwei Filterelementen 1, 2. **In** Fig. 1a ist ein erstes Filterelement 1 dargestellt, welches in Montagerichtung M in ein umlaufendes Dichtelement 3 eingeschoben wird, welches sich an einem zweiten Filterelement 2 befindet. **In** Fig. 1b ist der Filter 10 in fertig montiertem Zustand dargestellt. Erstes Filterelement 1 und zweites Filterelement 2 sind über das umlaufende Dichtelement 3 miteinander verbunden. Das erste Filterelement 1 ist an seinen Rändern mit Kantenbändern 9 versehen. Das umlaufende Dichtelement 3 weist eine innenliegende Dichtfläche 5 auf. Mit den Außenflächen seiner Kantenbänder 9 kommt das erste Filterelement 1 an der innenliegenden Dichtfläche 5 dichtend zur Anlage. Damit das erste Filterelement 1 sicher in dem umlaufenden Dichtelement 3 hält, können die Abmaße von erstem Filterelement 1 und der innenliegenden Dichtfläche 5 so aufeinander abgestimmt sein, dass eine Presspassung realisiert wird.

Das umlaufende Dichtelement 3 ist mit dem zweiten Filterelement 2 stoffschlüssig verbunden, z.B. verklebt.

Das umlaufende Dichtelement 3 besitzt eine weitere Dichtfläche, nämlich eine außenliegende Dichtfläche 4. Diese dient der Abdichtung des Filters 10 gegenüber einer hier nicht dargestellten Filteraufnahme 20.

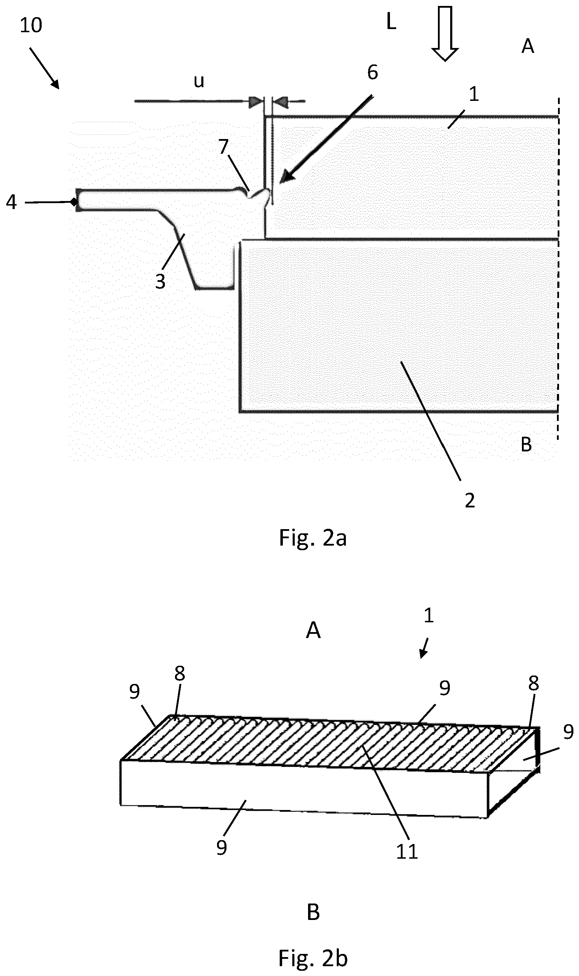

Fig. 2a zeigt eine zweite Ausführungsform eines Filters 10. Wie auch beim vorstehend beschriebenen Beispiel sind das umlaufende Dichtelement 3 und das zweite Filterelement 2 stoffschlüssig miteinander verbunden und das erste Filterelement 1 wird in einer Presspassung in dem umlaufenden Dichtelement 3 aufgenommen. Zur Realisierung der Presspassung weist die als Dichtlippe 6 ausgestaltete innenliegende Dichtfläche 5 gegenüber der Gegenfläche des ersten Filterelements 1 eine Überlappung u auf. Dies gilt für die unverformte Dichtlippe 6 vor dem Einschieben des ersten Filterelements 1 in das umlaufende Dichtelement 3. Im dargestellten Ausführungsbeispiel ist die Überlappung u größer als 1mm. Zum besseren Verständnis und für eine eindeutige Darstellbarkeit ist die Dichtlippe in der Fig. 2a im unverformten Zustand dargestellt.

Der Filter 10 wird von einem Luftstrom L von einer Anströmseite A hin zu einer Abströmseite B durchströmt und der Luftstrom L dabei gereinigt.

Das umlaufende Dichtelement 3 weist auf seiner Anströmseite eine Kompensationsnut 7 auf, also eine Vertiefung.

Fig. 2b zeigt eine Detailansicht des ersten Filterelements 1, wie es in den Filtern 10 der Figuren 1a-b und 2a und 4 zum Einsatz kommt. Das erste Filterelement 1 besitzt einen Faltenbalg 11 aus einem plissierten Filtermedium, z.B. aus Vliesstoff. An den Endfalten 8 und den Seitenflächen des Faltenbalgs 11 ist dieser mit Kantenbändern 9 versehen. Die Kanten der beiden Endfalten 8 sind zur Anströmseite A hin orientiert. Auch das zweite Filterelement 2 kann einen vierseitig mit Kantenbändern 9 versehenen Faltenbalg 11 besitzen.

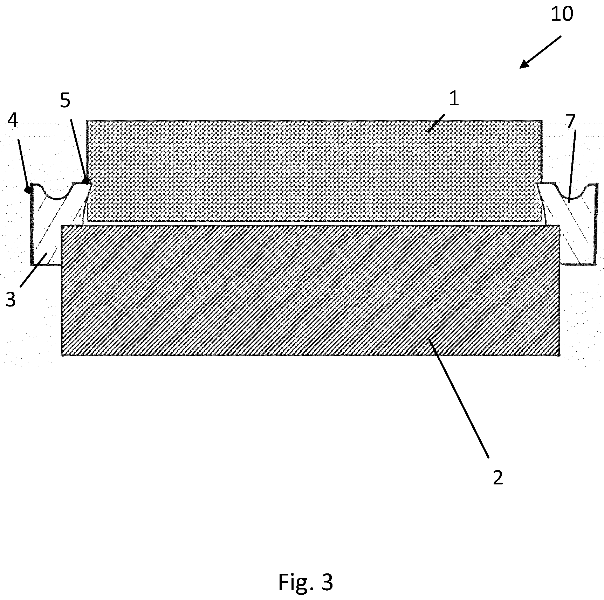

Fig. 3 zeigt eine weitere Ausführungsform eines Filters 10. Erstes und zweites Filterelement 1 und 2 können auch andere Ausgestaltungen aufweisen und beispielsweise als geschäumter oder wabenförmiger Filterkörper, als extrudiertes Adsorptionselement z.B. als Aktivkohle-Honeycombs ausgestaltet sein. Auch für das umlaufende Dichtelement 3 sind unterschiedlichste Ausformungen denkbar.

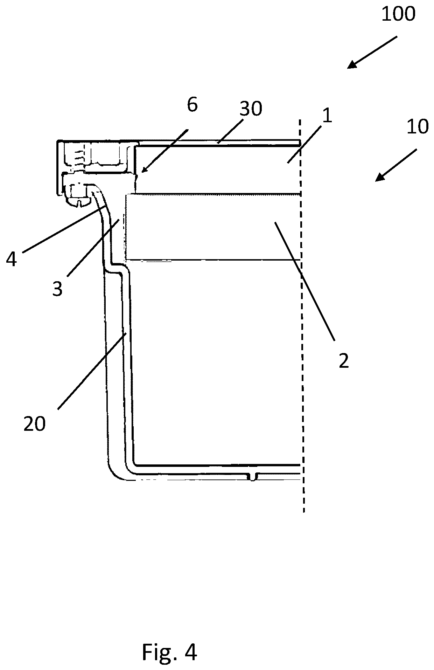

Fig. 4 zeigt eine Filteranordnung 100 mit einem Filter 10. Der Filter 10 ist in einem Filtergehäuse 20 als Filteraufnahme aufgenommen. Das umlaufende Dichtelement 3 des Filters 10 liegt zumindest mit einer seiner außenliegenden Dichtflächen 4 radial dichtend an Gegenflächen der Filteraufnahme 20 an. Der Filter 10 ist so im Wesentlichen leckagefrei zur Filteraufnahme 20.

Um den Filter 10 mit dem ersten Filterelement 1 auch bei evtl. Erschütterungen sicher in der Filteraufnahme 20 zu halten ist ein Deckel 30 vorgesehen, welche nach Montage des Filters 10 in die Filteraufnahme 20 angebracht wird. Wie in der Figur angedeutet können der Deckel 20, das umlaufende Dichtelement 3 und die Filteraufnahme 20 miteinander verschraubt sein.

### Bezugszeichenliste

- 1: erstes Filterelement
- 2: zweites Filterelement
- 3: umlaufendes Dichtelement
- 4: außenliegende Dichtfläche
- 5: innenliegende Dichtfläche
- 6: Dichtlippe
- 7: Kompensationsnut
- 8: Endfalte
- 9: Kantenband
- 10: Filter
- 11: Faltenbalg aus Filtermedium

- 20: Filteraufnahme (z.B. Filtergehäuse)
- 30: Deckel

- 100: Filteranordnung

- A: Anströmseite / Rohgasseite
- B: Abströmseite / Reingasseite
- L: Luftstrom
- M: Montagerichtung

- u: Überlappung

## Patentansprüche

1. Filter (10) zum Reinigen eines Luftstroms (L) mit zumindest einem ersten Filterelement (1) für eine erste Filterstufe und einem zweiten Filterelement (2) für einen zweite Filterstufe, wobei das zweite Filterelement (2) mit einem umlaufenden Dichtelement (3) versehen und das Dichtelement (3) stoffschlüssig mit dem zweiten Filterelement (2) verbunden ist,
wobei
das Dichtelement (3)
eine außenliegende, umlaufende Dichtfläche (4) zur Abdichtung gegenüber einer Filteraufnahme (20) und
eine innenliegende, umlaufende Dichtfläche (5) zur Abdichtung gegenüber dem ersten Filterelement (1) aufweist,
**dadurch gekennzeichnet, dass**
die innenliegende Dichtfläche (5) des Dichtelements (3) durch eine Dichtlippe (6) gebildet wird und
das Dichtelement (3) eine umlaufende Kompensationsnut (7) aufweist, welche als anströmseitig angeordnete, umlaufende Vertiefung ausgebildet ist.

2. Filter nach Anspruch 1
**dadurch gekennzeichnet, dass**
das erste Filterelement (1) in einem Presssitz in dem Dichtelement (3) aufgenommen ist.

3. Filter nach Anspruch 1
**dadurch gekennzeichnet, dass**
die Dichtlippe (6) in unverformtem Zustand eine Überlappung von mindestens 1 Millimeter gegenüber der Gegenfläche des ersten Filterelements (1) besitzt.

4. Filter nach einem der vorangehenden Ansprüche
**dadurch gekennzeichnet, dass**
das Dichtelement (3) an das zweite Filterelement (2) angespritzt ist und insbesondere aus Polyurethan oder Silikon ist.

5. Filter nach einem der vorangehenden Ansprüche
**dadurch gekennzeichnet, dass**
das Material des Dichtelements (3) eine Shore-Härte A größer 20 aufweist, insbesondere im Bereich 20 bis 50.

6. Filter nach einem der vorangehenden Ansprüche
**dadurch gekennzeichnet, dass**
das erste Filterelement (1) als umlaufend mit Kantenbändern (9) versehener Faltenbalg (11) aus einem plissierten Filtermedium ausgeführt ist.

7. Filter nach Anspruch 6
**dadurch gekennzeichnet, dass**
die Kanten der beiden Endfalten (8) des Filtermediums des ersten Filterelements (1) zu einer Anströmseite (A) des Filters (10) hin orientiert sind.

8. Filter nach einem der vorangehenden Ansprüche
**dadurch gekennzeichnet, dass**
das erste Filterelement (1) als ein Partikelfilterelement und/oder das zweite Filterelement (2) als ein Adsorptionsfilterelement ausgebildet sind.

9. Filteranordnung (100) mit einem Filter (10) nach einem der vorangehenden Ansprüche und einem Filtergehäuse (20) zur Aufnahme des Filters (10).

10. Filteranordnung nach Anspruch 9
**dadurch gekennzeichnet, dass**
diese einen rahmenförmigen Deckel (30), welcher mit dem Filtergehäuse (20) verbindbar ist, oder ein Gehäuseoberteil als Teil des Filtergehäuses (20), besitzt, zum Fixieren des Filters (10) im Filtergehäuse (20).

11. Verwendung einer Filteranordnung (100) nach einem der Ansprüche 9 oder 10 als Innenraumluftfilteranordnung zur Filtration und Reinigung der Kabinenzuluft in einem Fahrzeug oder als Zuluftfilter in einer Brennstoffzelleneinheit.

## Claims

1. Filter (10) for cleaning an air flow (L), having at least a first filter element (1) for a first filter stage and a second filter element (2) for a second filter stage, wherein the second filter element (2) is provided with a circumferential sealing element (3), and
the sealing element (3) is materially connected to the second filter element (2),
wherein
the sealing element (3) has
an outer circumferential sealing surface (4) for sealing with respect to a filter receptacle (20), and
an inner circumferential sealing surface (5) for sealing with respect to the first filter element (1),
**characterized in that**
the inner sealing surface (5) of the sealing element (3) is formed by a sealing lip (6), and
the sealing element (3) has a circumferential compensation groove (7), which is designed as a circumferential depression arranged on the inflow side.

2. Filter according to Claim 1,
**characterized in that**
the first filter element (1) is received in a press fit in the sealing element (3).

3. Filter according to Claim 1,
**characterized in that**,
in the undeformed state, the sealing lip (6) has an overlap of at least 1 millimetre with respect to the mating surface of the first filter element (1).

4. Filter according to one of the preceding claims,
**characterized in that**
the sealing element (3) is moulded onto the second filter element (2) and, in particular, is made of polyurethane or silicone.

5. Filter according to one of the preceding claims,
**characterized in that**
the material of the sealing element (3) has a Shore A hardness greater than 20, in particular in the range from 20 to 50.

6. Filter according to one of the preceding claims,
**characterized in that**
the first filter element (1) is embodied as a bellows (11) consisting of a pleated filter medium and provided circumferentially with edge strips (9).

7. Filter according to Claim 6,
**characterized in that**
the edges of the two end pleats (8) of the filter medium of the first filter element (1) are oriented towards an inflow side (A) of the filter (10).

8. Filter according to one of the preceding claims,
**characterized in that**
the first filter element (1) is designed as a particle filter element and/or the second filter element (2) is designed as an adsorption filter element.

9. Filter assembly (100) comprising a filter (10) according to one of the preceding claims and a filter housing (20) for accommodating the filter (10).

10. Filter assembly according to Claim 9,
**characterized in that**
said assembly has a frame-shaped cap (30), which can be connected to the filter housing (20), or a housing upper part as part of the filter housing (20), for fixing the filter (10) in the filter housing (20).

11. Use of a filter assembly (100) according to either of Claims 9 and 10 as an interior air filter assembly for filtering and cleaning the cabin inlet air in a vehicle or as an inlet air filter in a fuel cell unit.

## Revendications

1. Filtre (10) destiné à purifier un flux d'air (L), comprenant au moins un premier élément filtrant (1) pour un premier étage de filtration et un deuxième élément filtrant (2) pour un deuxième étage de filtration, le deuxième élément filtrant (2) étant pourvu d'un élément d'étanchéité périphérique (3) et
l'élément d'étanchéité (3) étant lié par liaison de matière au deuxième élément filtrant (2),
où
l'élément d'étanchéité (3) présentant
une surface d'étanchéité périphérique extérieure (4) destinée à assurer l'étanchéité vis-à-vis d'un logement de filtre (20), et
une surface d'étanchéité périphérique intérieure (5) destinée à assurer l'étanchéité vis-à-vis du premier élément filtrant (1),
**caractérisé en ce que**
la surface d'étanchéité intérieure (5) de l'élément d'étanchéité (3) est formée par une lèvre d'étanchéité (6),
l'élément d'étanchéité (3) présente une rainure de compensation périphérique (7), réalisée sous la forme d'un évidement périphérique disposé du côté amont du flux.

2. Filtre selon la revendication 1,
**caractérisé en ce que**
le premier élément filtrant (1) est reçu avec un ajustement serré dans l'élément d'étanchéité (3).

3. Filtre selon la revendication 1,
**caractérisé en ce que**
la lèvre d'étanchéité (6) présente, à l'état non déformé, un recouvrement d'au moins 1 millimètre par rapport à la surface opposée du premier élément filtrant (1).

4. Filtre selon l'une quelconque des revendications précédentes,
**caractérisé en ce que**
l'élément d'étanchéité (3) est surmoulé sur le deuxième élément filtrant (2) et est notamment en polyuréthane ou en silicone.

5. Filtre selon l'une quelconque des revendications précédentes,
**caractérisé en ce que**
le matériau de l'élément d'étanchéité (3) présente une dureté Shore A supérieure à 20, notamment dans la plage de 20 à 50.

6. Filtre selon l'une quelconque des revendications précédentes,
**caractérisé en ce que**
le premier élément filtrant (1) est réalisé sous la forme d'un soufflet plissé (11) en matériau filtrant plissé, pourvu de bandes de bord périphériques (9).

7. Filtre selon la revendication 6,
**caractérisé en ce que**
les arêtes des deux plis d'extrémité (8) du matériau filtrant du premier élément filtrant (1) sot orientées en direction d'un côté d'entrée du flux (A) du filtre (10).

8. Filtre selon l'une quelconque des revendications précédentes,
**caractérisé en ce que**
le premier élément filtrant (1) est réalisé sous la forme d'un élément filtrant à particules et/ou le deuxième élément filtrant (2) est réalisé sous la forme d'un élément filtrant à adsorption.

9. Ensemble filtrant (100) comprenant un filtre (10) selon l'une quelconque des revendications précédentes et un boîtier de filtre (20) destiné à recevoir le filtre (10).

10. Ensemble filtrant selon la revendication 9,
**caractérisé en ce que**
celui-ci comporte un couvercle en forme de cadre (30), pouvant être relié au boîtier de filtre (20), ou une partie supérieure de boîtier faisant partie du boîtier de filtre (20), pour fixer le filtre (10) dans le boîtier de filtre (20).

11. Utilisation d'un ensemble filtrant (100) selon l'une quelconque des revendications 9 ou 10 en tant qu'ensemble de filtration d'air d'habitacle destiné à la filtration et à la purification de l'air d'admission de l'habitacle d'un véhicule, ou en tant que filtre d'air d'admission dans une unité à pile à combustible.
